# EUROPEAN PATENT SPECIFICATION

(11) **EP 2 147 713 B1**
(45) Date of publication and mention of the grant of the patent: **01.12.2010**
(21) Application number: 09251680.6
(22) Date of filing: 30.06.2009
(51) Int. Cl.: B01D 53/94, F01N 3/027, F01N 3/20

(54) **Exhaust gas control apparatus for internal combustion engine**
Abgasreinigungsvorrichtung für einen Verbrennungsmotor
Appareil de contrôle de gaz d'échappement pour moteur à combustion interne

(30) Priority: 18.07.2008 JP 2008187301
(43) Date of publication of application: 27.01.2010
(73) Proprietor: Toyota Jidosha Kabushiki Kaisha, Toyota-shi, Aichi-ken 471-8571 (JP)
(72) Inventor: Tsuchiya, Jiro, Toyota-shi Aichi-ken, 471-8571 (JP)
(74) Representative: Albutt, Anthony John

(56) References cited:
- WO-A-2007/046519
- WO-A-2008/004704

## Description

### BACKGROUND OF THE INVENTION

### 1. Field of the Invention

The invention relates generally to an exhaust gas control apparatus for an internal combustion engine, and more specifically to an exhaust gas control apparatus for an internal combustion engine, which uses active oxygen.

### 2. Description of the Related Art

An exhaust gas control apparatus for an internal combustion engine that includes a plasma-assisted catalyst for removing particulate matter (PM) contained in exhaust gas (hereinafter, referred to as "PM exhaust catalyst") is described in, for example, Japanese Patent Application Publication No. 2006-97477 (JP-A-2006-97477). In such exhaust gas control apparatus, PM contained in exhaust gas is trapped in the PM exhaust catalyst. When, for example, an exhaust gas pressure sensor detects the state where the amount of PM trapped in the PM exhaust catalyst exceeds a permissible limit, a plasma generator generates plasma. Thus, the PM trapped in the PM exhaust catalyst is burned and removed by reaction with the plasma.

In the related art described above, the internal combustion engine may be stopped when the amount of PM trapped in the PM exhaust catalyst increases up to a value substantially equal to the permissible limit. In this case, the plasma generator may be actuated as soon as the internal combustion engine is restarted. However, the temperature of the PM exhaust catalyst and the temperature of the exhaust gas have not been increased to sufficient levels when the internal combustion engine is restarted. Therefore, even if the plasma generator is activated, the PM may not be efficiently burned and exhaust emission may deteriorate. Furthermore, because the PM combustion efficiency is low, the operating time of the plasma generator is increased, resulting in an increase in power consumption.

WO 2007/046519 discloses an exhaust cleaner for an internal combustion engine comprising a diesel particulate filter which is supplied with ozone in order to oxidise particulate matter.

EP1947303 discloses a similar arrangement.

The invention provides an exhaust gas control apparatus for an internal combustion engine that makes it possible to avoid the situation where a PM filter needs to be recovered immediately after start of an internal combustion engine, and to improve the engine efficiency and the exhaust emission at the start time of the internal combustion engine.

A first aspect of the invention relates to an exhaust gas control apparatus and method according to claims 1 and 7.

According to the first aspect of the invention, when the supply control means determines that the exhaust gas pressure exceeds the upper threshold value, the supply control means executes the control so that the active oxygen is supplied to the PM filter to recover the PM filter. The determination is made using the regular upper threshold value when a stop command from a unit, for example, an automatic stop unit is not input in the control unit. On the other hand, when a stop command is input in the control unit, the determination is made using the upper threshold value that is lower than the regular upper threshold value.

Therefore, when the stop command is received, even if the amount of PM trapped in the PM filter is determined to be non-problematic based on the regular determination standard, it is possible to supply ozone to the PM filter to bum the largest possible amount of PM trapped in the PM filter before the internal combustion engine is stopped. As a result, it is possible to significantly reduce the amount of PM that remains in the PM filter after the internal combustion engine is stopped. Therefore, when the internal combustion engine is restarted, it is possible to avoid the situation where the PM filter needs to be recovered immediately after restart of the internal combustion engine in spite of low PM combustion efficiency. This makes it possible to improve the exhaust emission and the engine efficiency at the start time of the internal combustion engine.

Further, using ozone as the active oxygen makes it possible to easily generate ozone and easily supply ozone to the PM filter.

### BRIEF DESCRIPTION OF THE DRAWINGS

The foregoing and further features and advantages of the invention will become apparent from the following description of an example embodiment with reference to the accompanying drawings, wherein the same or corresponding portions will be denoted by the same reference numerals and wherein:
FIG 1 is an overall configuration diagram that illustrates the configuration of a system according to an embodiment of the invention; and
FIG 2 is a flowchart for PM combustion control executed by an ECU in the embodiment of the invention.

### DETAILED DESCRIPTION OF EMBODIMENT

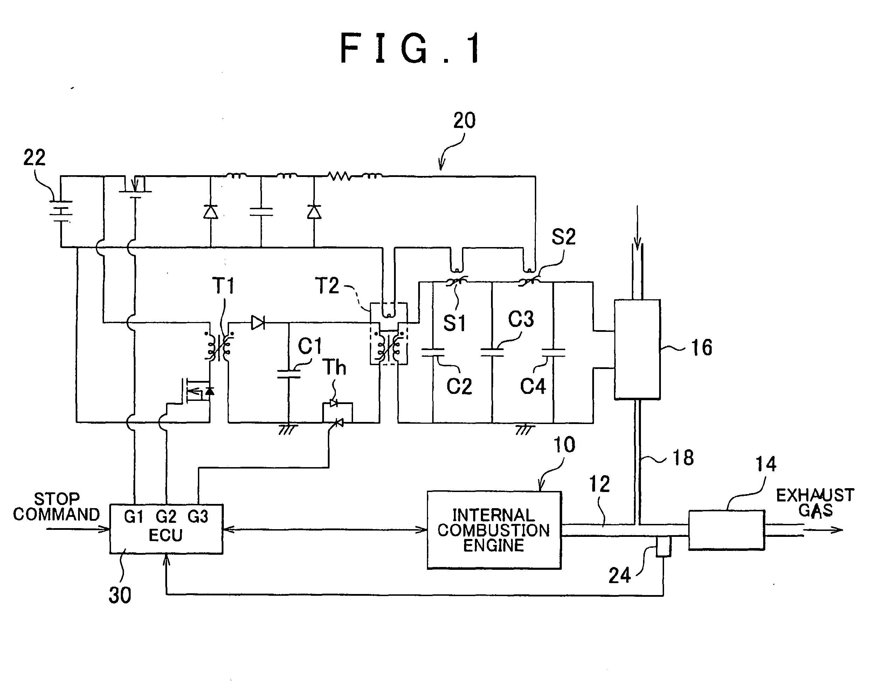

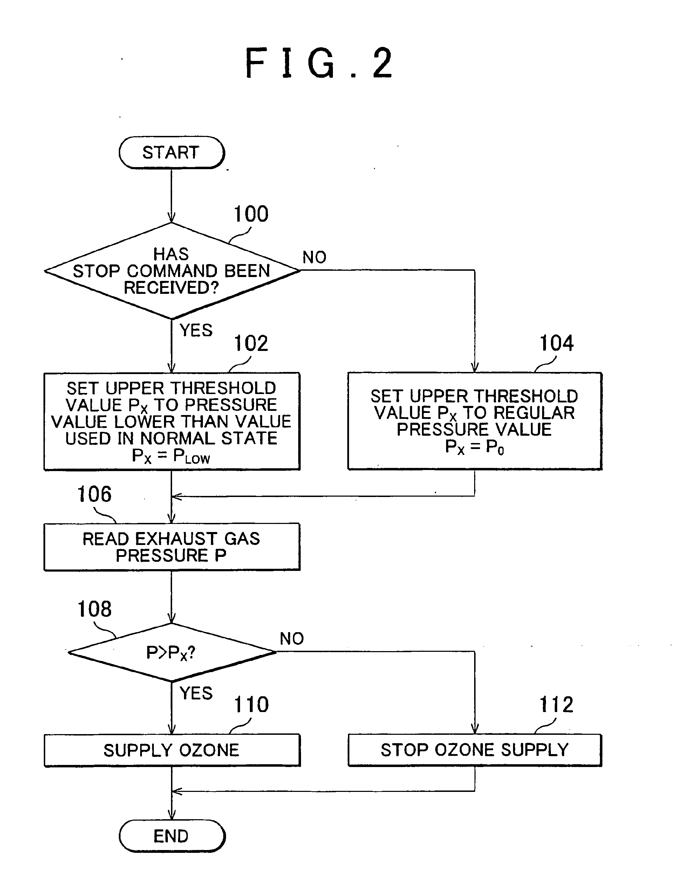

Hereafter, an embodiment of the invention will be described with reference to FIGs. 1 and 2. FIG 1 is an overall configuration diagram that illustrates the configuration of a system according to the embodiment of the invention. As shown in FIG 1, the system includes an internal combustion engine 10 formed of, for example, a diesel engine. The internal combustion engine 10 has an intake passage (not shown) through which intake air is introduced into a combustion chamber, and an exhaust passage 12 through which exhaust gas discharged from the combustion chamber flows. In the internal combustion engine 10, the intake air and fuel are burned in cylinders. Then, exhaust gas is discharged through the exhaust passage 12.

A PM filter 14 is provided in the exhaust passage 12. The PM filter 14 traps particulate matter (PM) contained in the exhaust gas to remove the PM from the exhaust gas. The PM filter 14 is formed of, for example, a diesel particulate filter (DPF), or a catalyst-integrated DPF formed by integrating various types of catalysts into a DPF.

The PM filter 14 is provided with an ozone generator 16, which serves as active oxygen generation means. The ozone generator 16 generates ozone from dry air, for example, the outside air, when being supplied with a high-voltage pulse from a pulse power supply circuit 20, which will be described later in detail. An ozone generator that generates ozone by introducing dry air or oxygen, from which ozone is generated, into a discharge tube to which a high voltage may be applied, or an ozone generator that generates ozone in another appropriate manner may be used as the ozone generator 16. The ozone generated by the ozone generator 16 is introduced into the exhaust passage 12 through a supply passage 18, and then is supplied to the upstream side of the PM filter 14. Thus, the PM trapped in the PM filter 14 is efficiently burned in a PM combustion process, which will be described later in detail.

Next, the pulse power supply circuit 20 used to operate the ozone generator 16 will be described. The pulse power supply circuit 20 generates pulsed high voltage from the voltage supplied from a battery 22. The pulse power supply circuit 20 is a circuit that is commonly used. The pulse power supply circuit 20 includes condensers C1, C2, C3, and C4, transformers T1 and T2, a thyristor Th, and magnetic switches S1 and S2.

When the pulse power supply circuit 20 is operated, the voltage from the battery 22 is increased and the increased voltage is supplied to the condenser C1 by a high-speed charging circuit that includes the transformer T1. In this state, if the thyristor Th is turned on, the voltage from the condenser C1 is further increased by the transformer T2, and the increased voltage is supplied to the condenser C2. In this case, when the magnetic switches S1 and S2 are operated at predetermined timing, the pulse width of the voltage from the condenser C2 is reduced and the voltage with the reduced pulse width is transferred to the condensers C3 and C4. Then, the high-voltage pulse is output from the condenser C4 to the ozone generator 16.

The system according to the embodiment of the invention includes a sensor system that has an exhaust gas pressure sensor 24 and an electronic control unit (ECU) 30 that controls the operation of the internal combustion engine 10. The exhaust gas pressure sensor 24 is exhaust gas pressure detection means that is provided at a position upstream of the PM filter 14 and near the PM filter 14. The exhaust gas pressure sensor 24 detects an exhaust gas pressure P at this position. When the airflow resistance of the PM filter 14, that is, the amount of PM trapped by the PM filter 14 increases, the exhaust gas pressure at a position upstream of the PM filter 14 increases in accordance with an increase in the airflow resistance. Therefore, the ECU 30 may obtain the exhaust gas pressure as a parameter that corresponds to the amount of PM trapped.

The sensor system described above includes various sensors that are necessary to control the operation of the internal combustion engine 10 in addition to the exhaust gas pressure sensor 24. The examples of such sensors include a crank angle sensor that detects the crank angle, an airflow meter that detects the intake air amount, and a coolant temperature sensor that detects the temperature of a coolant. The internal combustion engine 10 includes various actuators such as fuel injection valves and ignition plugs. The ECU 30 operates the actuators based on the information on the operating state of the internal combustion engine 10 detected by the sensor system, thereby controlling the operation of the internal combustion engine 10.

The ECU 30 includes output terminals G1, G2, and G3 used to control the pulse power supply circuit 20. The output terminal G1 is a terminal that is used to initialize the magnetic switches S1 and S2, and the output terminal G2 is a terminal that is used to operate the high-speed charging circuit based on a pulse-width modulation (PWM) signal. The output terminal G3 is a terminal that starts pulse transfer from the condenser C1 t the condensers C2, C3, and C4. When the ECU 30 turns all of the output terminals G1, G2, and G3 on, a high-voltage pulse is output from the pulse power supply circuit 20 to the ozone generator 16 to cause the ozone generator 16 to generate ozone. When the ECU 30 turns all of the output terminals G1, G2, and G3 off, the ozone generator 16 stops generating ozone.

The system according to the embodiment of the invention stops the internal combustion engine 10 when a stop command from another in-vehicle control unit is input in the ECU 30. Examples of the other control unit include an automatic stop unit for an internal combustion engine. The automatic stop unit executes idle stop control for stopping the internal combustion engine when the vehicle idles.

More specifically, the automatic stop unit determines whether the vehicle is stopped based on information from, for example, a brake switch, an accelerator pedal operation amount sensor, and a vehicle speed sensor. When it is determined that the vehicle is stopped, the automatic stop unit transmits a stop command for stopping the internal combustion engine to the ECU 30. Upon reception of the stop command, the ECU 30 executes a predetermined stop preparation process, which needs to be executed to stop the internal combustion engine 10, and then stops the internal combustion engine 10. The stop preparation process includes part of PM combustion control that will be described later in detail.

If the amount of PM trapped by the PM filter 14 increases, clogging of the PM filter 14 is more likely to occur. Therefore, in the PM combustion control, the PM trapped in the PM filter 14 is burned based on the exhaust gas pressure P detected by the exhaust gas pressure sensor 24. More specifically, ozone generated by the ozone generator 16 is supplied to the PM filter 14, when the exhaust gas pressure P exceeds an upper threshold value P0 that is used in a normal state (hereinafter, referred to as "regular upper threshold value P0") due to the increase in the amount of PM trapped.

The regular upper threshold value P0 is set in advance based on, for example, the permissible limit for the amount of PM that can be trapped by the PM filter 14. When a strong oxidizing power of ozone acts on the PM trapped in the filter 14 in the state where high-temperature exhaust gas is present, the PM is efficiently oxidized and burned. Therefore, with the PM combustion control, it is possible to quickly recover the PM filter 14 with the use of the oxidizing power of ozone.

When the internal combustion engine 10 is about to stop, for example, when a stop command is transmitted from the automatic stop unit to the ECU 30, preferably, the amount of PM in the filter 14 is reduced as much as possible before the internal combustion engine 10 is stopped. This is because, when the internal combustion engine 10 is restarted, the temperature of the PM filter 14 and the temperature of the exhaust gas are low. Therefore, even if ozone is supplied to the PM filter 14, the PM may not be efficiently burned. Furthermore, if the PM combustion efficiency is low, the operating time of the ozone generator 16 increases, resulting in an increase in power consumption.

Therefore, according to the embodiment of the invention, upon reception of a stop command, the ECU 30 switches the upper threshold value from the above-described regular upper threshold value P0 used in the normal state to an upper threshold value P_{LOW} that is lower than the regular upper threshold value P0 (P0 > P_{LOW}). As a result, when the ECU 30 receives a stop command, ozone is supplied to the PM filter 14 even if the amount of PM trapped is smaller than that in the normal state.

With this configuration, when the ECU 30 receives a stop command, the exhaust gas pressure determination process is executed with the use of the upper threshold value P_{LOW}, which is lower than the regular upper threshold value P0. Therefore, when the ECU 30 receives a stop command, even if the amount of PM trapped in the PM filter 14 is determined to be non-problematic based on the regular determination standard, it is possible to supply ozone to the PM filter 14 to burn the largest possible amount of PM trapped in the PM filter 14 before the internal combustion engine 10 is stopped. As a result, it is possible to significantly reduce the amount of PM that remains in the PM filter 14 after the internal combustion engine 10 is stopped. Therefore, when the internal combustion engine 10 is restarted, it is possible to avoid the situation where the PM filter 14 needs to be recovered immediately after restart of the internal combustion engine 10 in spite of low PM combustion efficiency. This makes it possible to improve the exhaust emission and the engine efficiency at the start time of the internal combustion engine 10.

FIG 2 is a flowchart showing control executed by the ECU 30 in the embodiment of the invention. The control routine shown in FIG 2 is periodically executed during the operation of the internal combustion engine 10. In the control routine, it is first determined whether the ECU 30 has received a stop command from the automatic stop unit (step 100). If an affirmative determination is made in step 100, an upper threshold value Px is set to the upper threshold value P_{LOW} that is lower than the regular threshold value P0 (step 102). On the other hand, if a negative determination is made in step 100, the upper threshold value Px is set to the regular threshold value P0 (step 104).

Then, the ECU 30 obtains the exhaust gas pressure with the use of the exhaust gas pressure sensor 24 (step 106), and determines whether the detected exhaust gas pressure P is higher than the upper threshold value Px (step 108). If an affirmative determination is made in step 108, the ozone generator 16 is activated so that the generated ozone is supplied to the PM filter 14 (step 110). On the other hand, if a negative determination is made in step 108, the ozone generator 16 is stopped so that the supply of ozone to the PM filter 14 is stopped (step 112).

In the embodiment of the invention, steps 106 to 110 in FIG 2 indicate concrete examples of supply control means, and steps 100 to 104 in FIG. 2 indicate concrete examples of threshold value changing means.

The embodiment of the invention has been described using the automatic stop unit, which executes, for example, the idling stop control, as an example of a device that transmits a stop command to the internal combustion engine. However, the invention is not limited to this. For example, in a hybrid vehicle in which an internal combustion engine and an electric motor are used in combination as power sources, the control according to the embodiment of the invention may be executed when the internal combustion engine is stopped to drive the vehicle in a motor-power cruise mode. In this case, the control according to the embodiment of the invention may be executed when the conditions for driving the vehicle in the motor-power cruise mode are satisfied and a stop command is transmitted to the internal combustion engine.

If, for example, a power-off circuit with a delay function is used, the invention may be applied to a case where the engine is stopped in a regular manner, that is, the engine is stopped when the driver turns off an ignition key. In this case, the power-off circuit continues supplying electric power to the ozone generator 16 for a predetermined time period, for example, after the ignition key is turned off, and then automatically shuts off the power supply. The control according to the embodiment of the invention may be executed during the predetermined time period.

Further, in the embodiment of the invention, the exhaust gas pressure sensor 24 detects the exhaust gas pressure at a position upstream of the PM filter 14, which is used as the parameter that corresponds to the amount of PM trapped. However, the position at which the exhaust gas pressure is detected is not limited to this. For example, if another catalyst or filter is provided downstream of the PM filter 14, the exhaust gas pressure may be detected at a position downstream of the PM filter 14. In this case, the exhaust gas pressure decreases as the amount of PM trapped increases. Alternatively, a pressure difference between the upstream side and the downstream side of the PM filter 14 may be detected as a parameter that corresponds to the amount of PM trapped.

In the embodiment of the invention, the DPF or the catalyst-integrated DPF is employed as the PM filter 14. However, the PM filter used in the invention is not limited to these DPFs. PM filters other than DPFs may be used as the PM filter 14.

In the embodiment of the invention, ozone is used as the active oxygen that is added to the exhaust gas. However, the active oxygen added to the exhaust gas is not limited to ozone. Active oxygen other than ozone (for example, oxygen negative ion that is denoted by, for example, O-, O²⁻, O₂⁻, O₃⁻, or Oₙ⁻) may be added to the exhaust gas.

In the embodiment described above, the invention is applied to the internal combustion engine 10 formed of a diesel engine. However, an engine to which the invention is applied is not limited to a diesel engine. The invention may be applied to various types of internal combustion engines, for example, a gasoline engine.

In the embodiment of the invention, the ozone generator 16 is provided outside an exhaust gas passage, and arranged separately from the PM filter 14. However, the arrangement of the ozone generator 16 is not limited to this. The ozone generator may be provided in the exhaust gas passage or inside the PM filter. If the ozone generator is arranged in this manner, the active oxygen (ozone) may be generated by, for example, generating plasma in the exhaust gas passage or in the PM filter using, for example, a high-voltage pulse.

## Claims

1. An exhaust gas control apparatus for an internal combustion engine (10), which includes a PM filter (14) that traps particulate matter in exhaust gas discharged from the internal combustion engine, active oxygen generation means (16) for generating active oxygen that is supplied to the PM filter, wherein the active oxygen generation means (16) generates ozone as the active oxygen, exhaust gas pressure detection means (24) for detecting an exhaust gas pressure at a position near the PM filter, and a control unit (30) that controls an operation of the internal combustion engine and that includes supply control means for controlling the active oxygen generation means to supply the active oxygen to the PM filter when determining that the exhaust gas pressure exceeds an upper threshold value,
the exhaust gas control apparatus **characterized in that** the control unit includes threshold value changing means for setting, when a stop command for the internal combustion engine is input in the control unit, the upper threshold value to a value that is lower than a value used in a normal state in which the stop command is not input in the control unit.

2. The exhaust gas control apparatus according to claim 1, wherein the internal combustion engine (10) is formed of a diesel engine, and the PM filter is a diesel particulate filter.

3. The exhaust gas control apparatus according to claim 2, wherein the PM filter (14) is a catalyst-integrated diesel particulate filter formed by integrating a catalyst into the diesel particulate filter.

4. The exhaust gas control apparatus according to any one of claims 1 to 3, wherein the exhaust gas pressure detection means (24) is provided upstream of the PM filter.

5. The exhaust gas control apparatus according to any one of claims 1 or 2, wherein the exhaust gas pressure detection means (24) is provided downstream of the PM filter.

6. The exhaust gas control apparatus according to any one of claims 1 to 3, wherein the exhaust gas pressure detection means (24) detects a difference between a pressure on an upstream side of the PM filter (14) and a pressure on a downstream side of the PM filter.

7. An exhaust gas control method for an internal combustion engine (10) provided with a PM filter that traps particulate matter in exhaust gas discharged from the internal combustion engine, active oxygen generation means (16) for generating active oxygen that is supplied to the PM filter, wherein the active oxygen generation means (16) generates ozone as the active oxygen exhaust gas pressure detection means (24) for detecting an exhaust gas pressure at a position near the PM filter, and a control unit (30) that controls an operation of the internal combustion engine and that includes supply control means for controlling the active oxygen generation means to supply the active oxygen to the PM filter when determining that the exhaust gas pressure exceeds an upper threshold value,
the exhaust gas control method **characterized by** comprising:
determining whether the stop command for the internal combustion engine is input in the control unit; and
setting, when the stop command is input in the control unit, the upper threshold value to a value that is lower than a value used in a normal state.

8. An exhaust gas control system for an internal combustion engine, **characterized by** comprising:
the exhaust gas control apparatus according to any one of claims 1 to 6; and
an automatic stop unit that issues a stop command to automatically stop the internal combustion engine.

9. The exhaust gas control system according to claim 8, wherein the stop command to automatically stop the internal combustion engine is issued to execute idle stop control.

10. The exhaust gas control system according to claim 8, wherein:
the internal combustion engine (10) is used in combination with an electric motor that is used as a power source; and
the stop command to automatically stop the internal combustion engine is issued to drive a vehicle in a motor-power cruise mode.

11. The exhaust gas control system according to claim 8, wherein the stop command to automatically stop the internal combustion engine (10) is issued to stop the internal combustion engine with an off-delay function.

## Patentansprüche

1. Abgassteuergerät für eine Brennkraftmaschine (10), das einen Partikelfilter (14), der Partikel im Abgas, das von der Brennkraftmaschine abgegeben ist, auffängt, eine Aktivsauerstofferzeugungseinrichtung (16) zum Erzeugen von aktivem Sauerstoff, der zu dem Partikelfilter zugeführt ist, wobei die Aktivsauerstofferzeugungseinrichtung (16) Ozon als den aktiven Sauerstoff erzeugt, eine Abgasdruckerfassungseinrichtung (24) zum Erfassen eines Abgasdrucks an einer Position nahe dem Partikelfilter und eine Steuereinheit (30) aufweist, die einen Betrieb der Brennkraftmaschine steuert und die eine Zuführsteuereinrichtung zum Steuern der Aktivsauerstofferzeugungseinrichtung aufweist, um den Aktivsauerstoff zu dem Partikelfilter zuzuführen, wenn bestimmt ist, dass der Abgasdruck einen oberen Schwellenwert übersteigt,
wobei das Abgassteuergerät **dadurch gekennzeichnet ist, dass** die Steuereinheit eine Schwellenwertänderungseinheit aufweist zum Einstellen des oberen Schwellenwerts, wenn ein Stoppsteuerbefehl für die Brennkraftmaschine in die Steuereinheit eingegeben ist, auf einen Wert, der niedriger als ein Wert ist, der in einem normalen Zustand verwendet ist, in dem der Stoppsteuerbefehl nicht in die Steuereinheit eingegeben ist.

2. Abgassteuergerät nach Anspruch 1, wobei die Brennkraftmaschine (10) aus einer Dieselmaschine gebildet ist und der Partikelfilter ein Dieselpartikelfilter ist.

3. Abgassteuergerät nach Anspruch 2, wobei der Partikelfilter (14) ein Katalysator integrierender Dieselpartikelfilter ist, der durch ein Integrieren eines Katalysators in den Dieselpartikelfilter ausgebildet ist.

4. Abgassteuergerät nach einem der Ansprüche 1 bis 3, wobei die Abgasdruckerfassungseinrichtung (24) stromaufwärts von dem Partikelfilter vorgesehen ist.

5. Abgassteuergerät nach einem der Ansprüche 1 oder 2, wobei die Abgasdruckerfassungseinrichtung (24) stromabwärts von dem Partikelfilter vorgesehen ist.

6. Abgassteuergerät nach einem der Ansprüche 1 bis 3, wobei die Abgasdruckerfassungseinrichtung (24) eine Differenz zwischen einem Druck an einer stromaufwärtigen Seite des Partikelfilters (14) und einem Druck an einer stromabwärtigen Seite des Partikelfilters erfasst.

7. Abgassteuerverfahren für eine Brennkraftmaschine (10), die mit einem Partikelfilter, der Partikel in Abgas, das von der Brennkraftmaschine abgegeben ist, auffängt, einer Aktivsauerstofferzeugungseinrichtung (16) zum Erzeugen von Aktivsauerstoff, der zu dem Partikelfilter zugeführt wird, wobei die Aktivsauerstofferzeugungseinrichtung (16) Ozon als den Aktivsauerstoff erzeugt, einer Abgasdruckerfassungseinrichtung (24) zum Erfassen eines Abgasdrucks an einer Position nahe dem Partikelfilter, und einer Steuereinheit (30) versehen ist, die einen Betrieb der Brennkraftmaschine steuert und die eine Zuführsteuereinrichtung zum Steuern der
Aktivsauerstofferzeugungseinrichtung aufweist, um den Aktivsauerstoff zu dem Partikelfilter zuzuführen, wenn bestimmt ist, dass der Abgasdruck einen oberen Schwellenwert übersteigt,
wobei das Abgassteuerverfahren durch Folgendes **gekennzeichnet** ist:
Bestimmen, ob der Stoppsteuerbefehl für die Brennkraftmaschine in die Steuereinheit eingegeben ist; und
Einstellen des oberen Schwellenwerts, wenn der Stoppsteuerbefehl in die Steuereinheit eingegeben ist, auf einen Wert, der niedriger als ein Wert ist, der in einem normalen Zustand verwendet wird.

8. Abgassteuersystem für eine Brennkraftmaschine, **gekennzeichnet durch**:
das Abgassteuergerät nach einem der Ansprüche 1 bis 6; und
eine automatische Stoppeinheit, die einen Stoppsteuerbefehl ausgibt, um automatisch die Brennkraftmaschine zu stoppen.

9. Abgassteuersystem nach Anspruch 8, wobei der Stoppsteuerbefehl, um die Brennkraftmaschine automatisch zu stoppen, ausgegeben ist, um eine Leerlaufstoppsteuerung auszuführen.

10. Abgassteuersystem nach Anspruch 8, wobei:
die Brennkraftmaschine (10) in Kombination mit einem Elektromotor verwendet ist, der als eine Kraftquelle verwendet ist; und
der Stoppsteuerbefehl, um die Brennkraftmaschine automatisch zu stoppen, ausgegeben ist, um ein Fahrzeug in einer Motorkraftreisebetriebsart anzutreiben.

11. Abgassteuersystem nach Anspruch 8, wobei der Stoppsteuerbefehl, um die Brennkraftmaschine (10) automatisch zu stoppen, ausgegeben ist, um die Brennkraftmaschine mit einer Ausschaltverzögerungsfunktion zu stoppen.

## Revendications

1. Dispositif de commande de gaz d'échappement pour un moteur à combustion interne (10), qui comprend un filtre PM (14) qui piège la matière particulaire présente dans le gaz d'échappement déchargé du moteur à combustion interne, des moyens de génération d'oxygène actif (16) pour générer de l'oxygène actif qui est délivré au filtre PM, dans lequel les moyens de génération d'oxygène actif (16) génèrent de l'ozone en tant qu'oxygène actif, des moyens de détection de pression de gaz d'échappement (24) pour détecter une pression de gaz d'échappement à une position à proximité du filtre PM, et- une unité de commande (30) qui commande un fonctionnement du moteur à combustion interne et qui comprend des moyens de commande d'alimentation pour commander les moyens de génération d'oxygène actif pour délivrer l'oxygène actif au filtre PM lorsqu'il est déterminé que la pression de gaz d'échappement est supérieure à une valeur de seuil supérieure,
le dispositif de commande de gaz d'échappement étant **caractérisé en ce que** l'unité de commande comprend des moyens de modification de valeur de seuil pour fixer, lorsqu'une commande d'arrêt pour le moteur à combustion interne est appliquée à l'unité de commande, la valeur de seuil supérieure à une valeur qui est inférieure à une valeur utilisée dans un état normal dans lequel la commande d'arrêt n'est pas appliquée à l'unité de commande.

2. Dispositif de commande de gaz d'échappement selon la revendication 1, dans lequel le moteur à combustion interne (10) est constitué d'un moteur diesel, et le filtre PM est un filtre à particules diesel.

3. Dispositif de commande de gaz d'échappement selon la revendication 2, dans lequel le filtre PM (14) est un filtre à particules diesel à catalyseur intégré formé en intégrant un catalyseur dans le filtre à particules diesel.

4. Dispositif de commande de gaz d'échappement selon l'une quelconque des revendications 1 à 3, dans lequel les moyens de détection de pression de gaz d'échappement (24) sont prévus en amont du filtre PM.

5. Dispositif de commande de gaz d'échappement selon l'une quelconque des revendications 1 et 2, dans lequel les moyens de détection de pression de gaz d'échappement (24) sont prévus en aval du filtre PM.

6. Dispositif de commande de gaz d'échappement selon l'une quelconque des revendications 1 à 3, dans lequel les moyens de détection de pression de gaz d'échappement (24) détectent une différence entre une pression d'un côté amont du filtre PM (14) et une pression d'un côté aval du filtre PM.

7. Procédé de commande de gaz d'échappement pour un moteur à combustion interne (10) pourvu d'un filtre PM qui piège la matière particulaire présente dans le gaz d'échappement déchargé du moteur à combustion interne, des moyens de génération d'oxygène actif (16) pour générer de l'oxygène actif qui est délivré au filtre PM, dans lequel les moyens de génération d'oxygène actif (16) génèrent de l'ozone en tant qu'oxygène actif, des moyens de détection de pression de gaz d'échappement (24) pour détecter une pression de gaz d'échappement à une position à proximité du filtre PM, et une unité de commande (30) qui commande un fonctionnement du moteur à combustion interne et qui comprend des moyens de commande d'alimentation pour commander les moyens de génération d'oxygène actif pour délivrer l'oxygène actif au filtre PM lorsqu'il est déterminé que la pression de gaz d'échappement est supérieure à une valeur de seuil supérieure,
le procédé de commande de gaz d'échappement étant **caractérisé en ce qu'**il consiste à :
déterminer si la commande d'arrêt pour le moteur à combustion interne est appliquée à l'unité de commande ; et
fixer, lorsque la commande d'arrêt est appliquée à l'unité de commande, la valeur de seuil supérieure à une valeur qui est inférieure à une valeur utilisée dans un état normal.

8. Système de commande de gaz d'échappement pour un moteur à combustion interne, **caractérisé en ce qu'**il comprend :
le dispositif de commande de gaz d'échappement selon l'une quelconque des revendications 1 à 6 ; et
une unité d'arrêt automatique qui émet une commande d'arrêt pour arrêter automatiquement le moteur à combustion interne.

9. Système de commande de gaz d'échappement selon la revendication 8, dans lequel la commande d'arrêt pour arrêter automatiquement le moteur à combustion interne est émise pour exécuter une commande d'arrêt au ralenti.

10. Système de commande de gaz d'échappement selon la revendication 8, dans lequel :
le moteur à combustion interne (10) est utilisé en combinaison avec un moteur électrique qui est utilisé en tant que source de puissance ; et
la commande d'arrêt pour arrêter automatiquement le moteur à combustion interne est émise pour commander un véhicule dans un mode de croisière de puissance de moteur.

11. Système de commande de gaz d'échappement selon la revendication 8, dans lequel la commande d'arrêt pour arrêter automatiquement le moteur à combustion interne (10) est émise pour arrêter le moteur à combustion interne par une fonction de retard à l'arrêt.
